# EUROPÄISCHE PATENTANMELDUNG

(11) **EP 3 767 910 A1**
(43) Veröffentlichungstag der Anmeldung: **20.01.2021**
(21) Anmeldenummer: 19187301.7
(22) Anmeldetag: 19.07.2019
(51) Int. Cl.: H04L 29/06

(54) **VERFAHREN ZUR KONFIGURATION VON FIREWALL-EINRICHTUNGEN FÜR EIN KOMMUNIKATIONSNETZ UND KOMMUNIKATIONSNETZ-MANAGEMENT-SYSTEM**

(71) Anmelder: Siemens Aktiengesellschaft, 80333 München (DE)
(72) Erfinder: Koch, Ricarda, 91154 Roth (DE); Rehm, Andreas, 90475 Nürnberg (DE); Riggers, Jens, 90596 Schwanstetten (DE); Teufel, Christian, 91344 Waischenfeld (DE)

(57) **Zusammenfassung**

Zur Konfiguration von Firewall-Einrichtungen für ein Kommunikationsnetz werden auf eine Benutzer-Eingabe an einer graphischen Benutzerschnittstelle (500) Kommunikationsgeräte und/oder Gruppen von Kommunikationsgeräten (501-502), zwischen denen Kommunikationsbeziehungen (503) bestehen, ausgewählt und innerhalb der Kommunikationsbeziehungen nutzbare Dienste (504) festgelegt. Die ausgewählten Kommunikationsgeräte (501-502), die festgelegten Dienste (504) und ermittelte Firewall-Einrichtungen (505-506), die topologisch zwischen den ausgewählten Kommunikationsgeräten (501-502) angeordnet sind, werden an der graphischen Benutzerschnittstelle (500) für eine Benutzer-Bestätigung zu konfigurierender Firewall-Einrichtungen dargestellt. Für entsprechend einer Benutzer-Bestätigung zu konfigurierende Firewall-Einrichtungen werden Firewall-Regeln erzeugt und an die entsprechend der Benutzer-Bestätigung zu konfigurierenden Firewall-Einrichtungen zur Anwendung übermittelt.

## Beschreibung

Die vorliegende Erfindung betrifft ein Verfahren zur Konfiguration von Firewall-Einrichtungen für ein Kommunikationsnetz, insbesondere ein Kommunikationsnetz eines industriellen Automatisierungssystems, und ein Kommunikationsnetz-Management-System zu Durchführung des Verfahrens.

Ein industrielles Automatisierungssystem umfasst üblicherweise eine Vielzahl von über ein industrielles Kommunikationsnetz miteinander vernetzten Automatisierungsgeräten und dient im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echzeit-Kommunikationsprotokolle, wie PROFINET, PROFIBUS, Real-Time-Ethernet oder Time-Sensitive Networking (TSN), verwendet.

Gestörte Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht vollständig übermittelte oder kompromittierte Nachrichten einen Übergang oder Verbleib eines industriellen Automatisierungssystems in einen sicheren Betriebszustand verhindern. Durch einen für industrielle Automatisierungssysteme typischen Meldungsverkehr mit verhältnismäßig vielen, aber relativ kurzen Nachrichten werden obige Probleme verstärkt.

Aufgrund einer Nutzung für häufig äußerst unterschiedliche Anwendungen können in Ethernet-basierten Kommunikationsnetzen beispielsweise Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann dazu führen, dass Datenströme oder Datenrahmen mit Echtzeitanforderungen nicht entsprechend einer angeforderten bzw. benötigten Dienstgüte übermittelt werden.

Aus US8555373B2 ist eine zwischen einem Quell-Gerät und einem Ziel-Gerät vorgesehene Firewall bekannt, die eine Hardware-Sicherheitskomponente zur Prüfung von aus einem Datenpaket extrahierten Daten gegen eine zulässige Liste umfasst. Zusätzlich führt die Hardware-Sicherheitskomponente eine zustandsbasierte Prüfung hinsichtlich eines Protokolls durch. Die Firewall kann als Security-Proxy ausgestaltet sein und mittels einer Software-Sicherheitskomponente gesicherte Sitzungen zwischen zwei Teilnehmern ermöglichen. Zur Authentifizierung bzw. Entschlüsselung zu prüfender Pakete und Verschlüsselung geprüfter Pakete greift die Software-Sicherheitskomponente auf die Hardware-Sicherheitskomponente zurück.

In WO 2018/010949 A1 ist ein Verfahren zum Aufbau gesicherter Kommunikationsverbindungen zu einem industriellen Automatisierungssystem beschrieben, bei dem eine Verbindungsverwaltungseinrichtung bei einem positiven Berechtigungsüberprüfungsergebnis Zugriffskontrollinformationen zum Aufbau einer verschlüsselten Kommunikationsverbindung zwischen einem ersten Kommunikationsgerät eines anfordernden Benutzers und einem ausgewählten zweiten Kommunikationsgerät für diese Kommunikationsgeräte bereitstellt. Dabei wird die Verbindungsverwaltungseinrichtung durch eine auf einem Firewall-System ablaufende Server-Instanz gebildet. Über eine verschlüsselte Kommunikationsverbindung zwischen dem ersten Kommunikationsgerät des anfordernden Benutzers und dem ausgewählten zweiten Kommunikationsgerät übermittelte Datenpakete werden für eine auf festgelegten Sicherheitsregeln basierende Überprüfung durch das Firewall-System entschlüsselt und bei erfolgreicher Überprüfung verschlüsselt zum ersten Kommunikationsgerät des anfordernden Benutzers oder zum ausgewählten zweiten Kommunikationsgerät weitergeleitet.

In immer komplexeren Kommunikationsnetzen besteht eine große Herausforderung darin, richtige Firewall-Regeln festzulegen und zuverlässig nachzuverfolgen, für welche Firewall-Einrichtungen Geräten welche Firewall-Regeln zu erstellen sind. Darüber hinaus muss bei Adressumsetzung (Network Address Translation - NAT) sichergestellt, dass Firewall-Einrichtungen und Kommunikationsgeräte bzw. Geräteeinheiten mit Adressumsetzfunktion konsistent zueinander konfiguriert sind.

Der vorliegenden Erfindung liegt daher die Aufgabe zugrunde, ein Verfahren zur Konfiguration von Firewall-Einrichtungen für ein Kommunikationsnetz anzugeben, das eine wenig fehleranfällige, nachvollziehbare Definition von Firewall-Regeln in komplexen Kommunikationsnetzen ermöglicht, sowie eine geeignete Vorrichtung zur Durchführung des Verfahrens zu schaffen.

Diese Aufgabe wird erfindungsgemäß durch ein Verfahren mit den in Anspruch 1 angegebenen Merkmalen und durch ein Kommunikationsnetz-Management-System mit den in Anspruch 12 angegebenen Merkmalen gelöst. Vorteilhafte Weiterbildungen der vorliegenden Erfindung sind in den abhängigen Ansprüchen angegeben.

Entsprechend dem erfindungsgemäßen Verfahren zur Konfiguration von Firewall-Einrichtungen für ein Kommunikationsnetz werden auf eine Benutzer-Eingabe an einer graphischen Benutzerschnittstelle Kommunikationsgeräte bzw. Gruppen von Kommunikationsgeräten, zwischen denen Kommunikationsbeziehungen bestehen, ausgewählt und innerhalb der Kommunikationsbeziehungen nutzbare Dienste festgelegt. Außerdem werden Kommunikationsnetzadressen der ausgewählten Kommunikationsgeräte und den festgelegten Diensten zugeordnete Ports, Kommunikationsprotokolle bzw. Statusmeldungen ermittelt. Die den festgelegten Diensten zugeordneten Statusmeldungen können beispielsweise zulässige ICMP-Pakettypen umfassen.

Darüber hinaus werden erfindungsgemäß topologisch zwischen den ausgewählten Kommunikationsgeräten angeordnete Firewall-Einrichtungen ermittelt. Des Weiteren werden die ausgewählten Kommunikationsgeräte, die festgelegten Dienste und die ermittelten Firewall-Einrichtungen an der graphischen Benutzerschnittstelle für eine Benutzer-Bestätigung zu konfigurierender Firewall-Einrichtungen dargestellt. Für entsprechend einer Benutzer-Bestätigung zu konfigurierende Firewall-Einrichtungen Firewall-Regeln werden erzeugt. Dabei umfassen die Firewall-Regeln die ermittelten Kommunikationsnetzadressen der ausgewählten Kommunikationsgeräte und die den festgelegten Diensten zugeordneten Ports, Kommunikationsprotokolle bzw. Statusmeldungen. Die erzeugten Firewall-Regeln werden an die entsprechend der Benutzer-Bestätigung zu konfigurierenden Firewall-Einrichtungen zur Anwendung übermittelt. Vorzugsweise werden die erzeugten Firewall-Regeln vor einer Übermittlung an die zu konfigurierenden Firewall-Einrichtungen mit bereits definierten Firewall-Regeln verglichen und nur bei Änderungen im Vergleich zu den bereits definierten Firewall-Regeln an die zu konfigurierenden Firewall-Einrichtungen übermittelt.

Insgesamt ermöglicht die vorliegende Erfindung eine benutzerfreundliche, auf definierten Kommunikationsbeziehungen basierende graphische Projektierung von Firewall-Regeln in Abhängigkeit von zwischen Kommunikationspartnern zu nutzenden Diensten. Durch eine ausgehend von Kommunikationsbeziehungen klar strukturierte Definition von Firewall-Regeln können diese automatisch und konsistent für alle betroffenen Geräte erzeugt werden.

Vorzugsweise werden für die Kommunikationsbeziehungen erzeugte Firewall-Regeln jeweils einheitlich an sämtliche einer jeweiligen Kommunikationsbeziehung zugeordnete Firewall-Einrichtungen zur Anwendung übermittelt. Entsprechend einer weiteren vorteilhaften Ausgestaltung der vorliegenden Erfindung werden an der graphischen Benutzerschnittstelle topologisch zwischen den ausgewählten Kommunikationsgeräten angeordnete Kommunikationsgeräte mit Adressumsetzungsfunktion (NAT) dargestellt und Zuordnungen zwischen den Kommunikationsgeräten mit Adressumsetzungsfunktion und den zu konfigurierenden Firewall-Einrichtungen ermittelt. Auf dieser Grundlage werden die Firewall-Regeln für Firewall-Einrichtungen mit zugeordnetem Kommunikationsgerät mit Adressumsetzungsfunktion werden Adressumsetzungstabellen der Kommunikationsgeräte mit Adressumsetzungsfunktion angepasst. Die Kommunikationsgeräte mit Adressumsetzungsfunktion können beispielweise Router, insbesondere Router mit einer jeweils integrierten Firewall-Einrichtung, sein.

Entsprechend einer besonders bevorzugten Ausgestaltung der vorliegenden Erfindung sind für die Kommunikationsgeräte bzw. Firewall-Einrichtungen topologische und gerätebezogene Informationen in einer Datenbank eines Kommunikationsnetz-Management-Systems erfasst. Vorteilhafterweise werden die topologischen und gerätebezogenen Informationen aus der Datenbank abgerufen und zur Darstellung der ausgewählten Kommunikationsgeräte sowie der topologisch zwischen diesen angeordneten Firewall-Einrichtungen an der graphischen Benutzerschnittstelle mittels einer Bildsyntheseeinheit des Kommunikationsnetz-Management-Systems aufbereitet. Die topologisch zwischen den ausgewählten Kommunikationsgeräten angeordneten Firewall-Einrichtungen können damit beispielsweise anhand der in der Datenbank des Kommunikationsnetz-Management-Systems erfassten topologischen und gerätebezogenen Informationen ermittelt werden.

Entsprechend einer alternativen Ausgestaltung der vorliegenden Erfindung werden die topologisch zwischen den ausgewählten Kommunikationsgeräten angeordneten Firewall-Einrichtungen entsprechend Benutzer-Vorgabe ausgewählt. Im Rahmen der Benutzer-Vorgabe ausgewählte Geräte werden anhand der in der Datenbank des Kommunikationsnetz-Management-Systems erfassten gerätebezogenen Informationen darauf überprüft, ob sie Firewall-Funktionen aufweisen. Nur bei Vorliegen einer Firewall-Funktion werden diese Geräte für eine Ermittlung der topologisch zwischen den ausgewählten Kommunikationsgeräten angeordneten Firewall-Einrichtungen übernommen. Somit kann trotz manueller Vorgabe eine plausible Ermittlung der topologisch zwischen den ausgewählten Kommunikationsgeräten angeordneten Firewall-Einrichtungen sichergestellt werden.

Das erfindungsgemäße Kommunikationsnetz-Management-System zur Durchführung eines Verfahrens entsprechend vorangehenden Ausführungen vorgesehen und dafür ausgestaltet sowie eingerichtet, auf eine Benutzer-Eingabe an einer graphischen Benutzerschnittstelle Kommunikationsgeräte und/oder Gruppen von Kommunikationsgeräten, zwischen denen Kommunikationsbeziehungen bestehen, auszuwählen und innerhalb der Kommunikationsbeziehungen nutzbare Dienste festzulegen. Außerdem ist das Kommunikationsnetz-Management-System dafür ausgestaltet und eingerichtet, Kommunikationsnetzadressen der ausgewählten Kommunikationsgeräte und den festgelegten Diensten zugeordnete Ports, Kommunikationsprotokolle bzw. Statusmeldungen zu ermitteln sowie topologisch zwischen den ausgewählten Kommunikationsgeräten angeordnete Firewall-Einrichtungen zu ermitteln.

Darüber hinaus ist das erfindungsgemäße Kommunikationsnetz-Management-System dafür ausgestaltet und eingerichtet, die ausgewählten Kommunikationsgeräte, die festgelegten Dienste und die ermittelten Firewall-Einrichtungen an der graphischen Benutzerschnittstelle für eine Benutzer-Bestätigung zu konfigurierender Firewall-Einrichtungen darzustellen und für entsprechend einer Benutzer-Bestätigung zu konfigurierende Firewall-Einrichtungen Firewall-Regeln zu erzeugen. Dabei umfassen die Firewall-Regeln die ermittelten Kommunikationsnetzadressen der ausgewählten Kommunikationsgeräte und die den festgelegten Diensten zugeordneten Ports, Kommunikationsprotokolle bzw. Statusmeldungen. Des Weiteren ist das Kommunikationsnetz-Management-System dafür ausgestaltet und eingerichtet, die erzeugten Firewall-Regeln an die entsprechend der Benutzer-Bestätigung zu konfigurierenden Firewall-Einrichtungen zur Anwendung zu übermitteln.

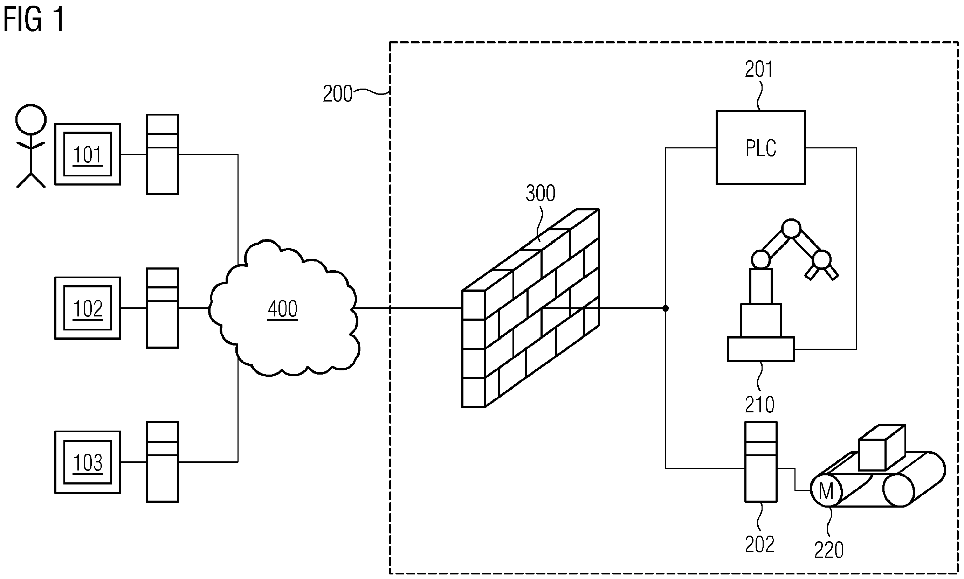

Die vorliegende Erfindung wird nachfolgend an einem Ausführungsbeispiel anhand der Zeichnung näher erläutert. Es zeigt
- Figur 1: eine Anordnung mit mehreren Fernwartungsrechnern außerhalb eines industriellen Automatisierungssystems und einem Firewall-System sowie mehreren Automatisierungsgeräten innerhalb des industriellen Automatisierungssystems,
- Figur 2: eine graphische Benutzerschnittstelle eines Kommunikationsnetz-Management-Systems zur Konfigurierung von Firewall-Einrichtungen eines Firewall-Systems.

Die in der Figur dargestellte Anordnung umfasst mehrere Fernwartungsrechner 101-103, die über ein Weitverkehrsnetz 400 mit einem Kommunikationsnetz eines industriellen Automatisierungssystems 200 verbunden sind. Die Fernwartungsrechner 101-103 können beispielsweise als PC, Laptop oder Tablet-PC ausgestaltet sein. Das industrielle Automatisierungssystem 200 umfasst zum Schutz vor unzulässigem Nachrichtenverkehr ein Firewall-System 300, das insbesondere im industriellen Automatisierungssystem 200 eingehende Datenpakete auf Basis von festgelegten Sicherheitsregeln überprüft. Diese Sicherheitsregeln umfassen im vorliegenden Ausführungsbeispiel übliche Firewall-Regeln und Regeln über eine Zulässigkeit von in Datenpaketen angegebenen Steuerungsbefehlen bzw. Steuerungsparametern für Automatisierungsgeräte 201-202 des industriellen Automatisierungssystems 200. Somit bietet das Kommunikationsnetz des industriellen Automatisierungssystems 200, in dem das Firewall-System 300 angeordnet ist, sicherheitstechnisch kontrollierte Zugriffsmöglichkeiten auf die Automatisierungsgeräte 201-202 und ist somit gesichert. Das Weitverkehrsnetz 400 kann beispielweise ein Mobilfunknetz oder ein IP-basiertes Kommunikationsnetz sein.

Die Automatisierungsgeräte 201-202 umfassen jeweils integrierte oder zugeordnete Kommunikationsmodule bzw. -geräte und können speicherprogrammierbare oder PC-basierte Steuerungen einer Maschine oder einer technischen Anlage sein, beispielsweise eines Roboters 210 oder einer Fördervorrichtung 220. Insbesondere umfassen die Automatisierungsgeräte 201-202 jeweils zumindest eine Zentraleinheit und eine Eingabe/Ausgabe-Einheit. Die Eingabe/Ausgabe-Einheiten dienen einem Austausch von Steuerungs- und Messgrößen zwischen dem jeweiligen Automatisierungsgerät 201-202 und einer durch das Automatisierungsgerät 201-202 gesteuerten Maschine oder Vorrichtung. Die Zentraleinheiten der Automatisierungsgerät 201-202 sind insbesondere für eine Ermittlung geeigneter Steuerungsgrößen aus erfassten Messgrößen vorgesehen.

Das Firewall-System 300 ist im vorliegenden Ausführungsbeispiel rechnerbasiert und kann insbesondere einen Hypervisor als Hardware-Abstraktionselement zwischen tatsächlich vorhandener Hardware des Firewall-Systems und auf dem Firewall-System 300 installierbaren, ablauffähigen Betriebssystemen umfassen. Ein solcher Hypervisor ermöglicht eine Bereitstellung einer virtuellen Umgebung, die partitionierte Hardwareressourcen, wie Prozessor, Speicher oder Peripheriegeräte umfasst. Auf diese Weise können mehrere dem Firewall-System 300 zugeordnete, virtualisierte Firewall-Einrichtungen realisiert werden. Anstelle eines Hypervisors können grundsätzlich auch andere bekannte Virtualisierungskonzepte als Hardware-Abstraktionsmittel zur Bereitstellung auf dem Firewall-System 300 ablaufender Instanzen genutzt werden.

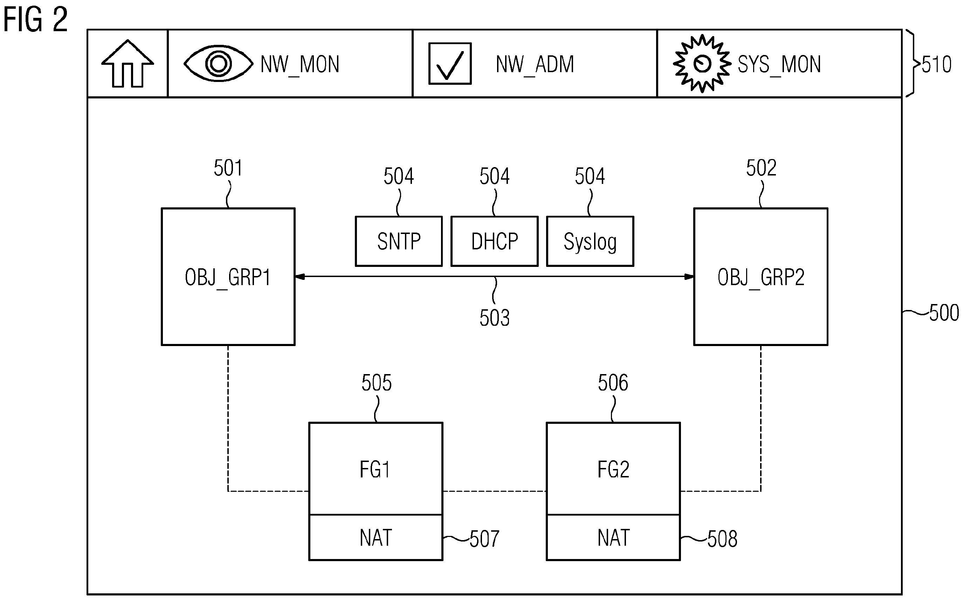

Zur Konfiguration von Firewall-Einrichtungen werden an der in Figur 2 dargestellten graphischen Benutzerschnittstelle 500 eines Kommunikationsnetz-Management-Systems auf eine Benutzer-Eingabe Kommunikationsgeräte bzw. Gruppen von Kommunikationsgeräten 501-502 ausgewählt, zwischen denen Kommunikationsbeziehungen 503 bestehen. Außerdem werden an der graphischen Benutzerschnittstelle 500 innerhalb der Kommunikationsbeziehungen 503 nutzbare Dienste 504 festgelegt. Im vorliegenden Ausführungsbeispiel werden zwei Objektgruppen ausgewählt, in deren Kommunikationsbeziehung beispielsweise SNTP, DHCP und Syslog als zulässige Dienste genutzt werden dürfen. Das Kommunikationsnetz-Management-System kann beispielsweise durch eine auf einem der Fernwartungsrechner 101-103 auflaufende Server-Instanz implementiert sein. Die graphische Benutzerschnittstelle 500 des Kommunikationsnetz-Management-Systems umfasst ferner zahlreiche Menüelemente 510, beispielsweise für Netzüberwachung, Netzadministration und Systemüberwachung.

Nach graphischer Projektierung der Kommunikationsbeziehungen 503 und zulässigen Dienste 504 werden durch das Kommunikationsnetz-Management-System Kommunikationsnetzadressen der ausgewählten Kommunikationsgeräte 501-502 und den festgelegten Diensten 504 zugeordnete Ports, Kommunikationsprotokolle bzw. Statusmeldungen ermittelt. Die den festgelegten Diensten zugeordneten Statusmeldungen können insbesondere zulässige ICMP-Pakettypen umfassen. Darüber hinaus werden mittels des Kommunikationsnetz-Management-Systems topologisch zwischen den ausgewählten Kommunikationsgeräten 501-502 angeordnete Firewall-Einrichtungen bzw. Gruppen von Firewall-Einrichtungen 505-506 ermittelt. Hierzu sind für die Kommunikationsgeräte 501-502 und Firewall-Einrichtungen 505-506 topologische und gerätebezogene Informationen in einer Datenbank des Kommunikationsnetz-Management-Systems erfasst.

Die topologischen und gerätebezogenen Informationen werden aus der Datenbank des Kommunikationsnetz-Management-Systems abgerufen und zur Darstellung der ausgewählten Kommunikationsgeräte 501-502 sowie der topologisch zwischen diesen angeordneten Firewall-Einrichtungen 505-506 an der graphischen Benutzerschnittstelle 500 mittels einer Bildsyntheseeinheit des Kommunikationsnetz-Management-Systems aufbereitet. Vorzugsweise werden die topologisch zwischen den ausgewählten Kommunikationsgeräten 501-502 angeordneten Firewall-Einrichtungen 505-506 anhand der in der Datenbank des Kommunikationsnetz-Management-Systems erfassten topologischen und gerätebezogenen Informationen ermittelt. Alternativ dazu können die topologisch zwischen den ausgewählten Kommunikationsgeräten 501-502 angeordneten Firewall-Einrichtungen 505-506 entsprechend Benutzer-Vorgabe ausgewählt werden. In diesem Fall werden im Rahmen der Benutzer-Vorgabe ausgewählte Geräte anhand der in der Datenbank des Kommunikationsnetz-Management-Systems erfassten gerätebezogenen Informationen darauf überprüft, ob sie Firewall-Funktionen aufweisen. Wenn jeweils eine Firewall-Funktion vorliegt, werden diese Geräte für eine Ermittlung der topologisch zwischen den ausgewählten Kommunikationsgeräten 501-502 angeordneten Firewall-Einrichtungen 505-506 übernommen, ansonsten nicht.

Abschließend werden die ausgewählten Kommunikationsgeräte 501-502, die festgelegten Dienste 504 und die ermittelten Firewall-Einrichtungen 505-506 werden an der graphischen Benutzerschnittstelle 500 für eine Benutzer-Bestätigung zu konfigurierender Firewall-Einrichtungen dargestellt. Auf dieser Grundlage werden für entsprechend einer Benutzer-Bestätigung zu konfigurierende Firewall-Einrichtungen 505-506 Firewall-Regeln erzeugt. Dabei umfassen die Firewall-Regeln die ermittelten Kommunikationsnetzadressen der ausgewählten Kommunikationsgeräte 501-502 und die den festgelegten Diensten 504 zugeordneten Ports, Kommunikationsprotokolle bzw. Statusmeldungen. Die erzeugten Firewall-Regeln werden danach an die entsprechend der Benutzer-Bestätigung zu konfigurierenden Firewall-Einrichtungen 505-506 zur Anwendung übermittelt. Vorzugsweise werden die erzeugten Firewall-Regeln vor einer Übermittlung an die zu konfigurierenden Firewall-Einrichtungen 505-506 mit bereits definierten Firewall-Regeln verglichen. Dementsprechend werden die erzeugten Firewall-Regeln nur bei Änderungen im Vergleich zu den bereits definierten Firewall-Regeln an die zu konfigurierenden Firewall-Einrichtungen 505-506 übermittelt. Grundsätzlich werden für die Kommunikationsbeziehungen 503 erzeugte Firewall-Regeln jeweils einheitlich an sämtliche einer jeweiligen Kommunikationsbeziehung 503 zugeordnete Firewall-Einrichtungen 505-506 zur Anwendung übermittelt. Ausnahmen hiervon ergeben sich bei Adressumsetzung (Network Adress Translation).

An der graphischen Benutzerschnittstelle 500 werden zusätzlich topologisch zwischen den ausgewählten Kommunikationsgeräten 501-502 angeordnete Kommunikationsgeräte 507-508 mit Adressumsetzungsfunktion dargestellt. Insbesondere werden Zuordnungen zwischen den Kommunikationsgeräten mit Adressumsetzungsfunktion 507-508 und den zu konfigurierenden Firewall-Einrichtungen 505-506 ermittelt. Abhängig hiervon werden die Firewall-Regeln für Firewall-Einrichtungen mit zugeordnetem Kommunikationsgerät mit Adressumsetzungsfunktion entsprechend Adressumsetzungstabellen der Kommunikationsgeräte mit Adressumsetzungsfunktion 507-508 angepasst werden. Die Kommunikationsgeräte mit Adressumsetzungsfunktion 507-508 können insbesondere Router sein, wobei alle oder zumindest ausgewählte Router jeweils eine integrierte Firewall-Einrichtung umfassen können.

## Patentansprüche

1. Verfahren zur Konfiguration von Firewall-Einrichtungen für ein Kommunikationsnetz, bei dem
- auf eine Benutzer-Eingabe an einer graphischen Benutzerschnittstelle (500) Kommunikationsgeräte und/oder Gruppen von Kommunikationsgeräten (501-502), zwischen denen Kommunikationsbeziehungen (503) bestehen, ausgewählt und innerhalb der Kommunikationsbeziehungen nutzbare Dienste (504) festgelegt werden,
- Kommunikationsnetzadressen der ausgewählten Kommunikationsgeräte und den festgelegten Diensten zugeordnete Ports, Kommunikationsprotokolle und/oder Statusmeldungen ermittelt werden,
- topologisch zwischen den ausgewählten Kommunikationsgeräten (501-502) angeordnete Firewall-Einrichtungen (507-508) ermittelt werden,
- die ausgewählten Kommunikationsgeräte (501-502), die festgelegten Dienste (504) und die ermittelten Firewall-Einrichtungen (505-506) an der graphischen Benutzerschnittstelle (500) für eine Benutzer-Bestätigung zu konfigurierender Firewall-Einrichtungen dargestellt werden,
- für entsprechend einer Benutzer-Bestätigung zu konfigurierende Firewall-Einrichtungen Firewall-Regeln erzeugt werden, wobei die Firewall-Regeln die ermittelten Kommunikationsnetzadressen der ausgewählten Kommunikationsgeräte und die den festgelegten Diensten zugeordneten Ports, Kommunikationsprotokolle und/oder Statusmeldungen umfassen,
- die erzeugten Firewall-Regeln an die entsprechend der Benutzer-Bestätigung zu konfigurierenden Firewall-Einrichtungen zur Anwendung übermittelt werden.

2. Verfahren nach Anspruch 1,
bei dem für die Kommunikationsbeziehungen erzeugte Firewall-Regeln jeweils einheitlich an sämtliche einer jeweiligen Kommunikationsbeziehung zugeordnete Firewall-Einrichtungen zur Anwendung übermittelt werden.

3. Verfahren nach einem der Ansprüche 1 oder 2,
bei dem an der graphischen Benutzerschnittstelle (500) topologisch zwischen den ausgewählten Kommunikationsgeräten (501-502) angeordnete Kommunikationsgeräte mit Adressumsetzungsfunktion (507-508) dargestellt werden, bei dem Zuordnungen zwischen den Kommunikationsgeräten mit Adressumsetzungsfunktion (507-508) und den zu konfigurierenden Firewall-Einrichtungen (505-506) ermittelt werden und bei dem die Firewall-Regeln für Firewall-Einrichtungen mit zugeordnetem Kommunikationsgerät mit Adressumsetzungsfunktion entsprechend Adressumsetzungstabellen der Kommunikationsgeräte mit Adressumsetzungsfunktion angepasst werden.

4. Verfahren nach Anspruch 3,
bei dem die Kommunikationsgeräte mit Adressumsetzungsfunktion (507-508) Router sind.

5. Verfahren nach Anspruch 4,
bei dem zumindest ausgewählte Router jeweils eine integrierte Firewall-Einrichtung umfassen.

6. Verfahren nach einem der Ansprüche 1 bis 5,
bei dem für die Kommunikationsgeräte und/oder Firewall-Einrichtungen topologische und gerätebezogene Informationen in einer Datenbank eines Kommunikationsnetz-Management-Systems erfasst sind.

7. Verfahren nach Anspruch 6,
bei dem die topologischen und gerätebezogenen Informationen aus der Datenbank abgerufen und zur Darstellung der ausgewählten Kommunikationsgeräte sowie der topologisch zwischen diesen angeordneten Firewall-Einrichtungen an der graphischen Benutzerschnittstelle mittels einer Bildsyntheseeinheit des Kommunikationsnetz-Management-Systems aufbereitet werden.

8. Verfahren nach einem der Ansprüche 6 oder 7,
bei dem die topologisch zwischen den ausgewählten Kommunikationsgeräten angeordneten Firewall-Einrichtungen anhand der in der Datenbank des Kommunikationsnetz-Management-Systems erfassten topologischen und gerätebezogenen Informationen ermittelt werden.

9. Verfahren nach einem der Ansprüche 6 oder 7,
bei dem die topologisch zwischen den ausgewählten Kommunikationsgeräten angeordneten Firewall-Einrichtungen entsprechend Benutzer-Vorgabe ausgewählt werden, bei dem im Rahmen der Benutzer-Vorgabe ausgewählte Geräte anhand der in der Datenbank des Kommunikationsnetz-Management-Systems erfassten gerätebezogenen Informationen überprüft werden, ob sie Firewall-Funktionen aufweisen, und bei dem diese Geräte nur bei Vorliegen einer Firewall-Funktion für eine Ermittlung der topologisch zwischen den ausgewählten Kommunikationsgeräten angeordneten Firewall-Einrichtungen übernommen werden.

10. Verfahren nach einem der Ansprüche 1 bis 9,
bei dem die den festgelegten Diensten zugeordneten Statusmeldungen zulässige ICMP-Pakettypen umfassen.

11. Verfahren nach einem der Ansprüche 1 bis 10,
bei dem die erzeugten Firewall-Regeln vor einer Übermittlung an die zu konfigurierenden Firewall-Einrichtungen mit bereits definierten Firewall-Regeln verglichen werden und bei dem die erzeugten Firewall-Regeln nur bei Änderungen im Vergleich zu den bereits definierten Firewall-Regeln an die zu konfigurierenden Firewall-Einrichtungen übermittelt werden.

12. Kommunikationsnetz-Management-System zur Durchführung eines Verfahrens nach einem der Ansprüche 1 bis 11, wobei das Kommunikationsnetz-Management-System dafür ausgestaltet und eingerichtet ist,
- auf eine Benutzer-Eingabe an einer graphischen Benutzerschnittstelle Kommunikationsgeräte und/oder Gruppen von Kommunikationsgeräten, zwischen denen Kommunikationsbeziehungen bestehen, auszuwählen und innerhalb der Kommunikationsbeziehungen nutzbare Dienste festzulegen,
- Kommunikationsnetzadressen der ausgewählten Kommunikationsgeräte und den festgelegten Diensten zugeordnete Ports, Kommunikationsprotokolle und/oder Statusmeldungen zu ermitteln,
- topologisch zwischen den ausgewählten Kommunikationsgeräten angeordnete Firewall-Einrichtungen zu ermitteln,
- die ausgewählten Kommunikationsgeräte, die festgelegten Dienste und die ermittelten Firewall-Einrichtungen an der graphischen Benutzerschnittstelle für eine Benutzer-Bestätigung zu konfigurierender Firewall-Einrichtungen darzustellen,
- für entsprechend einer Benutzer-Bestätigung zu konfigurierende Firewall-Einrichtungen Firewall-Regeln zu erzeugen, wobei die Firewall-Regeln die ermittelten Kommunikationsnetzadressen der ausgewählten Kommunikationsgeräte und die den festgelegten Diensten zugeordneten Ports, Kommunikationsprotokolle und/oder Statusmeldungen umfassen,
- die erzeugten Firewall-Regeln an die entsprechend der Benutzer-Bestätigung zu konfigurierenden Firewall-Einrichtungen zur Anwendung zu übermitteln.
